# EUROPEAN PATENT SPECIFICATION

(11) **EP 3 566 752 B1**
(45) Date of publication and mention of the grant of the patent: **01.07.2020**
(21) Application number: 18171020.3
(22) Date of filing: 07.05.2018
(51) Int. Cl.: A62C 13/76, A62C 37/50, G01N 27/22, G01N 1/22

(54) **DEVICE FOR MEASURING MOISTURE WITHIN PRESSURIZED FIREFIGHTING EQUIPMENT**
VORRICHTUNG ZUR MESSUNG DER FEUCHTIGKEIT IN DRUCKBEAUFSCHLAGTEN FEUERLÖSCHGERÄTEN
DISPOSITIF DE MESURE DE L'HUMIDITÉ À L'INTÉRIEUR D'UN ÉQUIPEMENT DE LUTTE CONTRE L'INCENDIE SOUS PRESSION

(43) Date of publication of application: 13.11.2019
(73) Proprietor: Faro S.r.l., 20081 Abbiategrasso (Milano) (IT)
(72) Inventor: ANNATELLI, Marco, I-20090 Cesano Boscone (Milano) (IT)
(74) Representative: Fioravanti, Corrado

(56) References cited:
- WO-A2-2011/056580
- US-A1- 2013 283 895
- US-A1- 2016 100 774

## Description

### Technical field

The present invention is, in general, in the field of firefighting equipment; in particular, the invention refers to a testing device for measuring moisture inside pressurized firefighting equipment.

### Prior Art

Firefighting equipment, in particular portable extinguishers or fixed installations which release an extinguishing gas or an extinguishing powder under the thrust of a pressurized gas, is well known.

For safety reasons, such equipment is subjected to periodic testing on the state of the extinguishing agent, to ensure that it is fully operational. In particular, any presence of moisture inside the equipment may, for example, compromise the functionality of the extinguishing powder, which may tend to clot and clog the expulsion ducts, hindering the correct delivery thereof.

For example, a conventional mobile-type extinguisher comprises an outer casing containing an extinguishing powder and a constantly pressurized propellant gas. For optimal operation, the powder must contain 0.2% moisture. If the moisture content exceeds 0.3%, it is considered appropriate (or even required by law) to replace the powder.

To avoid malfunctions, it is therefore necessary to regularly measure the moisture content in the propellant, although this operation may be complex or very inconvenient, especially in the case of portable extinguishers. In effect, to carry out the test, the equipment must be temporarily depressurized, and the original pressure level subsequently restored (an operation which, in the case of portable extinguishers, is generally not possible on site).

Moreover, the test itself may compromise the operational integrity of the device, as there is the risk that the equipment will no longer be properly closed, causing propellant to leak and a drop in the release pressure. Moreover, with the repressurization process, moisture could penetrate the powder from the outside, precisely as a result of the intervention.

For these reasons, particularly in the case of portable extinguishers, the powder is automatically changed at predetermined time intervals, regardless of the actual degradation. This is very disadvantageous not only from an economic point of view, but also from an environmental perspective, due to the difficulty in disposing of waste powders, which are often sent to landfills.

The need to reconcile, on the one hand, compliance with the regulations in force (for example, Italian law 9994/1, which require the automatic withdrawal of fire extinguishers after a predetermined period of time) and, on the other, the need for economic savings and environmental protection, requires limiting the waste of materials as much as possible, and minimizing the impact on the environment (reducing the chain of production, transportation, disposal, etc.), for example, by adhering to the virtuous model of the so-called circular economy.

A practical and economic solution is therefore necessary to detect small changes in moisture content in firefighting equipment, even when the tests are carried out on site, and outside specialized laboratories.

In this way, the disposal of powders that are still effective and usable would be avoided, also on the basis that the extinguishing powders do not undergo substantial aging, i.e. their extinguishing capacity remains unchanged through the years when adequately protected from moisture.

A moisture testing device for fire-fighting equipment is for example known from document WO 2011/056580 A2.

### Summary of the invention

An object of the present invention is to remedy the aforementioned problems.

To obtain such result, a device is provided for measuring the moisture inside a firefighting means containing a pressurized extinguishing gas or extinguishing powder which does not require the internal pressure to be released in order for the test to be carried out.

A device according to the present invention comprises a portable casing, inside of which at least two chambers are present. One of the chambers is placed in fluid connection with the inside of the firefighting means, so as to draw out a small amount of the relevant extinguishing gas or propellant gas (e.g., in the case that the extinguishing element is a powder), with which such chamber is filled.

A sensor means detects the moisture content of the gas collected in the aforesaid chamber, generating a signal which may be processed and viewed by an operator, so as to check whether the extinguishing powder actually needs to be replaced.

With a device according to the present invention, it is possible to determine the operational state of a pressurized extinguishing agent, reliably measuring even minimal differences in moisture, without the internal pressure of the equipment being substantially lowered.

Moreover, the extinguishers tested by means of the device according to the invention no longer need to be transported to the workshop to undergo testing, nor must they be returned and reinstalled at the destination place.

The aforesaid and other objects and advantages are achieved, according to an aspect of the invention, by a portable testing device for measuring the moisture content in pressurized firefighting means having the characteristics defined in claim 1. Preferential embodiments of the invention are defined in the dependent claims.

### Brief description of the figures

The functional and structural characteristics of some preferred embodiments of a portable device for measuring moisture according to the invention will now be described. Reference is made to the accompanying drawings, wherein:
- figure 1 is a schematic perspective view of a moisture content testing device according to an embodiment of the present invention, wherein the device is shown, as an example, connected to a mobile phone for displaying the results on the relevant display;
- figure 2 is a schematic perspective view of the device in figure 1, applied to a portable extinguisher;

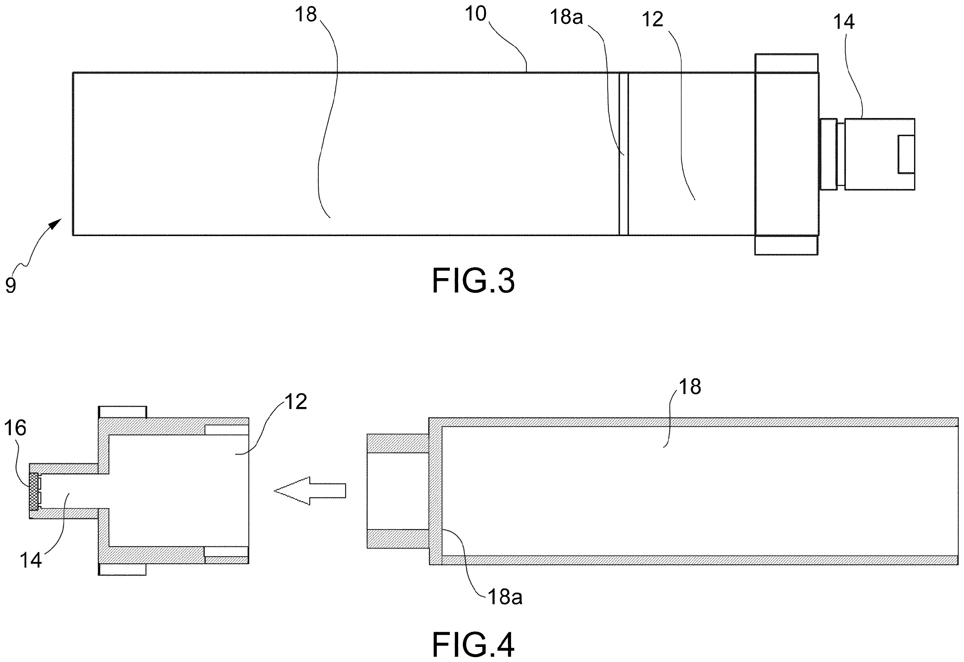

- figure 3 is a schematic side sectional view of a portable device, according to an embodiment of the invention;
- figure 4 is a schematic side sectional view of a portable device, according to an embodiment of the invention, wherein the two analysis chambers, illustrated in a disassembled configuration, are shown separately; and

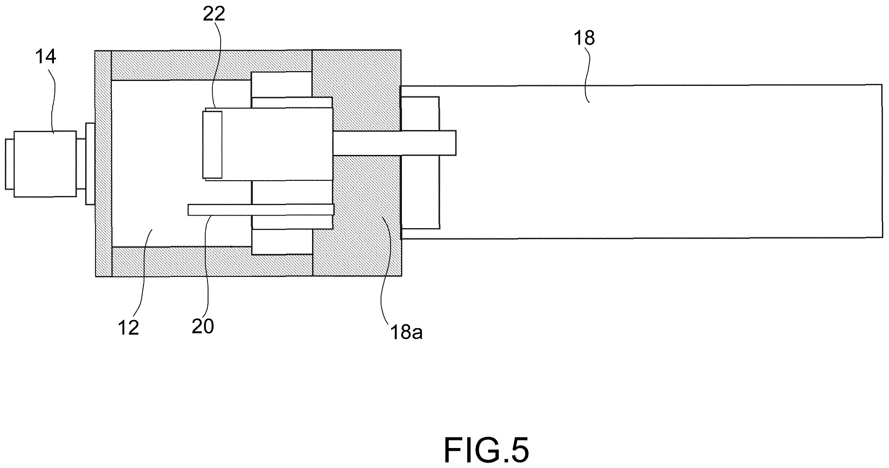

- figure 5 is a schematic side sectional view of a portable device also comprising a pressure sensor, according to an alternative embodiment of the invention.

### Detailed Description

Before explaining a plurality of embodiments of the invention in detail, it should be clarified that the invention is not limited in its application to the details of construction and to the configuration of the components provided in the following description or illustrated in the drawings.

The invention may assume other embodiments and may be implemented or achieved in essentially different ways. It should also be understood that the phraseology and terminology have descriptive purposes and should not be construed as limiting.

By way of example, referring to the accompanying figure, a portable device 9, for measuring moisture in pressurized firefighting equipment (not part of the invention), comprises an outer casing 10 (appropriately tubular in shape with dimensions suitable for manual manipulation by a user), in turn comprising a first chamber 12, which has an internal volume capable of receiving a gas flow from inside the pressurized firefighting equipment.

In the first chamber 12 a primary sensor means 20 (known per se) is housed, adapted to detect the moisture content in the gas contained in the first chamber 12 and to generate corresponding signals correlated to said moisture content. Appropriately, the primary sensor means 20 is configured to be directly in contact with the gas flowing into the first chamber 12.

The portable device 9 further comprises an attachment portion 14, adapted to place the first chamber 12 in fluid communication with the inside of the pressurized firefighting equipment.

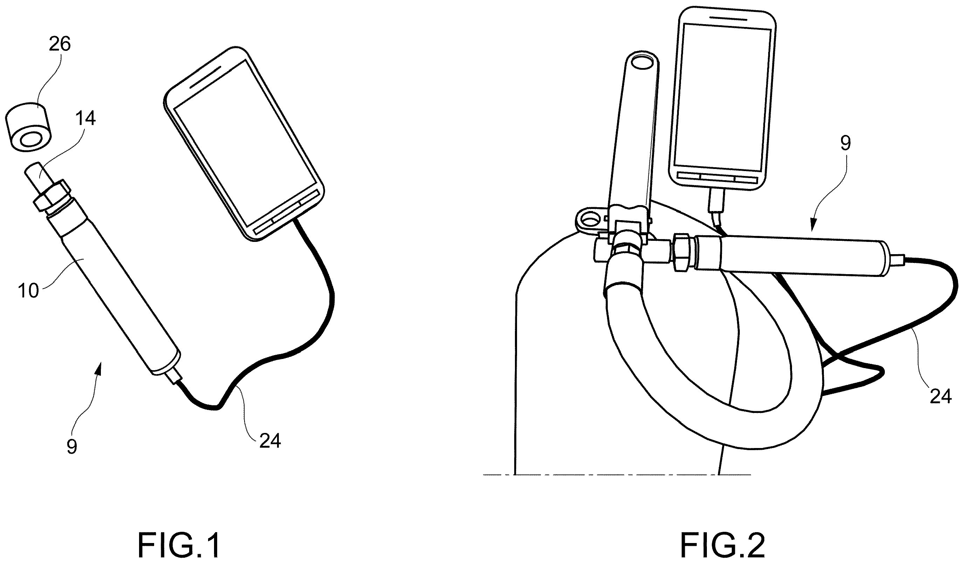

According to a preferred embodiment, the attachment portion 14 is configured so as to be insertable in the seat of the pressure gauge of a portable extinguisher (see, for example, figure 2). The pressure gauge of the extinguisher is a pressure measuring device conventionally located below the handle and is part of the valve that intercepts and regulates the outflow of the extinguishing agent. In this way, by removing the pressure gauge, the attachment portion 14 may be inserted into the relevant seat, through which a propellant gas flow may flow from inside the extinguisher into the first chamber 12 of the testing device 9. Appropriately, the attachment portion 14 is a threaded element of the type G 1/8 B or G 1/4 B, similar to the attachment element of a pressure gauge for extinguishers according to the standard EN 837-1/ 7.3.

The testing device 9 also comprises a first filter 16, adapted to allow the passage of the gas flow from the pressurized firefighting apparatus to the first chamber 12, holding at least part of any solid particles in suspension in such gas flow (e.g., particles of an extinguishing powder contained in the firefighting equipment) so that they do not penetrate into such first chamber 12. Appropriately, the filter element 16 is housed in the attachment portion 14, and preferably in the free end section of the latter.

The testing device also comprises a second chamber 18, wherein processing means are housed (for example, an electronic circuit board, known per se), adapted to electronically process the signals of the primary sensor means 20.

A wall 18a is interposed between the first chamber 12 and the second chamber 18. Appropriately, electrical/electronic connections between the primary sensor means 20 and the processing means may pass through the wall 18a.

According to a preferred embodiment, the second chamber 18 is coupled to the first chamber 12 in a releasable manner. Appropriately, the coupling may be of the snap type, threaded, etc.

According to one embodiment, a second primary sensor means 20 (not shown), adapted to detect the moisture content in the gas contained in the first chamber 12 and to generate corresponding signals correlated to such moisture content, is housed in the second chamber 18.

According to one embodiment, such second primary sensor means 20 is configured to detect a dielectric difference between the faces of the wall 18a facing the first and second chambers 12, 18. The dielectric difference is proportional to the moisture content of the gas collected in the first chamber 12 and is therefore indicative of the moisture absorbed by the extinguishing powder.

According to an alternative embodiment, the first chamber 12 is in fluid communication with the second chamber 18, so that the second primary sensor means 20 is in contact with at least part of the gas flow contained in the first chamber 12. For example, it is possible to double-check the moisture content of the gas, or the same device may be used to test a gas of a different nature, allowing the device 9 to interface alternately with means provided with extinguishing powder and means provided with extinguishing gas.

For example, the device 9 may comprise a second filter 16 at the interface between the first and second chambers 12, 18, whereby the second filter 16 may have a finer mesh with respect to the first filter 16. For example, the first filter may be configured to intercept the extinguishing powder suspended in the propellant gas of the extinguisher means, allowing the first primary sensor means 20 to analyze the moisture thereof, while the second filter may be configured, for example, to intercept the particles in suspension in the extinguishing gas of the extinguisher means. In this way, the same device 9 may be suitably used both for detecting the moisture content in the propellant gas of an extinguisher means containing an extinguishing powder, and for detecting the moisture content in the extinguishing gas of a different extinguisher means.

Appropriately, the first and/or the second filter 16 are adapted to intercept particles having a diameter between 30 and 300 µm.

A secondary sensor means 22 (known per se) may also be present, adapted to detect the pressure of the gas contained in the first chamber 12 and to generate corresponding signals correlated to such pressure.

According to a preferred embodiment, the testing device 9 comprises transmission means 24 adapted to transmit to the outside of the portable device 9 signals from the primary sensor means 20 and/or the data processed by the processing means.

The transmission means 24 are preferably configured to interface with a mobile telephone device, although other display and/or processing devices, external to the testing device 9, are not excluded, such as PCs, tablets, etc.

Appropriately, the transmission means 24 are configured in the form of a USB cable extending from the outer casing 10 but may be of any type known to the person skilled in the art (for example, wireless transmitter means, etc.).

A cap 26 may also be present, adapted to close and protect the attachment portion 14.

Various aspects and embodiments of a moisture content testing device in a firefighting means according to the invention have been described. It is understood that each embodiment may be combined with any other embodiment. The invention, moreover, is not limited to the described embodiments, but may vary within the scope defined by the accompanying claims.

## Claims

1. Portable testing device (9), for measuring the moisture inside pressurized fire-fighting equipment, comprising:
- an outer casing (10), comprising:
- a first chamber (12), having an internal volume adapted to receive a gas flow from inside the pressurized fire fighting equipment, wherein in said first chamber (12) a primary sensor means (20) is housed, adapted to detect the moisture content in the gas contained in the first chamber (12) and to generate corresponding signals correlated to said moisture content;
- an attachment portion (14), adapted to put the first chamber (12) in fluid communication with the inside of the pressurized firefighting equipment.
- a first filter (16), adapted to allow the gas flow to pass from the pressurized fire-fighting equipment to the first chamber (12), holding at least part of any solid particles suspended in said gas flow so that they do not penetrate into said first chamber (12);
- a second chamber (18), wherein processing means are housed, adapted to electronically process the signals of the primary sensor means (20); and
- a wall (18a), interposed between the first chamber (12) and the second chamber (18).

2. Device according to claim 1, wherein the second chamber (18) is coupled to the first chamber (12) in a releasable manner.

3. Device according to claim 1 or 2, wherein the attachment portion (14) is configured so as to be insertable in the seat of the pressure gauge of a portable extinguisher.

4. Device according to claim 3, wherein the attachment portion (14) is a threaded element of type G 1/8 B or G 1/4 B.

5. Device according to any one of the preceding claims, wherein a second primary sensor means (20), adapted to detect the moisture content in the gas contained in the first chamber (12) and to generate corresponding signals correlated to said moisture content, is housed in the second chamber (18).

6. Device according to claim 5, wherein the second primary sensor means (20) is configured to detect a dielectric difference between the faces of the wall (18a) facing the first and second chambers (12, 18).

7. Device according to claim 5, wherein the first chamber (12) is in fluid communication with the second chamber (18), so that the second primary sensor means (20) is in contact with at least part of the gas flow contained in the first chamber (12).

8. Device according to claim 7, comprising a second filter (16) at the interface between the first and second chambers (12, 18), said second filter (16) having a finer mesh with respect to the first filter (16).

9. Device according to any one of the preceding claims, wherein the first and/or the second filter (16) are adapted to intercept particles having a diameter between 30 and 300 µm.

10. Device according to any one of the preceding claims, comprising a secondary sensor means (22), adapted to detect the pressure of the gas contained in the first chamber (12) and generating corresponding signals correlated to said pressure.

11. Device according to any one of the preceding claims, comprising transmission means (24) adapted to transmit outside of the portable device (9) signals from the primary sensor means (20) and/or the data processed by the processing means.

12. Device according to claim 11, wherein the transmission means (24) are configured to interface with a mobile telephone device.

13. Device according to claim 11 or 12, wherein the transmission means (24) are configured in the form of a USB cable extending from the outer casing (10).

## Patentansprüche

1. Tragbare Prüfvorrichtung (9) zur Messung der Feuchtigkeit innerhalb von unter Druck stehenden Feuerbekämpfungsausrüstung, umfassend:
- ein Außengehäuse (10), umfassend:
- eine erste Kammer (12) mit einem Innenvolumen, das zur Aufnahme eines Gasstroms aus dem Inneren der unter Druck stehenden Feuerbekämpfungsausrüstung angepasst ist, bei denen in der ersten Kammer (12) ein primäres Sensormittel (20) untergebracht ist, das dazu ausgelegt ist, den Feuchtigkeitsgehalt in dem in der ersten Kammer (12) enthaltenen Gas zu erfassen und entsprechende Signale zu erzeugen, die mit dem Feuchtigkeitsgehalt korrelieren;
- einen Befestigungsabschnitt (14), der dazu angepasst ist, die erste Kammer (12) in Fluidverbindung mit dem Inneren der unter Druck stehenden Feuerlöschausrüstung zu bringen;
- einen ersten Filter (16), der dazu angepasst ist, dass der Gasstrom von der unter Druck stehenden Feuerbekämpfungsausrüstung zur ersten Kammer (12) gelangen kann und mindestens einen Teil der in dem Gasstrom suspendierten festen Partikel zurück hält, damit sie nicht in die erste Kammer (12) eindringen;
- eine zweite Kammer (18), in der Verarbeitungsmittel untergebracht sind, die dazu angepasst sind, die Signale der primären Sensormittel (20) elektronisch zu verarbeiten; und
- eine Wand (18a), die zwischen der ersten Kammer (12) und der zweiten Kammer (18) angeordnet ist.

2. Vorrichtung nach Anspruch 1, wobei die zweite Kammer (18) auf lösbare Weise mit der ersten Kammer (12) verbunden ist.

3. Vorrichtung nach Anspruch 1 oder 2, wobei der Befestigungsabschnitt (14) so konfiguriert ist, dass er in den Sitz des Manometers eines tragbaren Feuerlöschers einsetzbar ist.

4. Vorrichtung nach Anspruch 3, wobei der Befestigungsabschnitt (14) ein Gewindeelement vom Typ G 1/8 B oder G 1/4 B ist.

5. Vorrichtung nach einem der vorhergehenden Ansprüche, wobei ein zweites primäres Sensormittel (20) untergebracht ist, das angepasst ist, um den Feuchtigkeitsgehalt in dem in der ersten Kammer (12) enthaltenen Gas zu erfassen und entsprechende Signale zu erzeugen, die mit dem Feuchtigkeitsgehalt in der zweiten Kammer (18) korreliert sind.

6. Vorrichtung nach Anspruch 5, wobei das zweite primäre Sensormittel (20) konfiguriert ist, um eine dielektrische Differenz zwischen den der ersten und zweiten Kammer (12, 18) zugewandten Seiten der Wand (18a) zu erfassen.

7. Vorrichtung nach Anspruch 5, wobei die erste Kammer (12) in Fluidverbindung mit der zweiten Kammer (18) steht, so dass das zweite primäre Sensormittel (20) mit mindestens einem Teil des in der ersten Kammer (12) enthaltenen Gasstroms in Kontakt steht.

8. Vorrichtung nach Anspruch 7, umfassend einen zweiten Filter (16) an der Grenzfläche zwischen der ersten und der zweiten Kammer (12, 18), wobei der zweite Filter (16) ein feineres Netz in Bezug auf den ersten Filter (16) aufweist.

9. Vorrichtung nach einem der vorhergehenden Ansprüche, wobei der erste und / oder der zweite Filter (16) angepasst sind, um Partikel mit einem Durchmesser zwischen 30 und 300 µm abzufangen.

10. Vorrichtung nach einem der vorhergehenden Ansprüche, umfassend ein sekundäres Sensormittel (22), das dazu angepasst ist, den Druck des in der ersten Kammer (12) enthaltenen Gases zu erfassen und entsprechende Signale zu erzeugen, die mit dem Druck korreliert sind.

11. Vorrichtung nach einem der vorhergehenden Ansprüche, umfassend Übertragungsmittel (24), die dazu angepasst sind, außerhalb der tragbaren Vorrichtung (9) Signale von dem primären Sensormittel (20) und / oder die von den Verarbeitungsmitteln verarbeiteten Daten zu übertragen.

12. Vorrichtung nach Anspruch 11, wobei die Übertragungsmittel (24) konfiguriert sind, um eine Schnittstelle mit einer Mobiltelefonvorrichtung herzustellen.

13. Vorrichtung nach Anspruch 11 oder 12, wobei die Übertragungsmittel (24) in Form eines USB-Kabels konfiguriert sind, das sich von dem Außengehäuse (10) erstreckt.

## Revendications

1. Dispositif de mise à l'essai portable (9), pour mesurer l'humidité à l'intérieur d'un équipement de lutte contre l'incendie sous pression, comprenant :
- un boîtier externe (10), comprenant :
- une première chambre (12), ayant un volume interne adapté pour recevoir un flux gazeux depuis l'intérieur de l'équipement de lutte contre l'incendie sous pression, dans lequel dans ladite première chambre (12) est logé un moyen de capteur primaire (20), adapté pour détecter la teneur en humidité dans le gaz contenu dans la première chambre (12) et pour générer des signaux correspondants corrélés à ladite teneur en humidité ;
- une partie d'attache (14), adaptée pour placer la première chambre (12) en communication fluidique avec l'intérieur de l'équipement de lutte contre l'incendie sous pression,
- un premier filtre (16), adapté pour permettre au flux gazeux de passer de l'équipement de lutte contre l'incendie sous pression à la première chambre (12), retenant au moins une partie de particules solides quelconques en suspension dans ledit flux gazeux de sorte qu'elles ne pénètrent pas dans ladite première chambre (12) ;
- une seconde chambre (18), dans laquelle sont logés des moyens de traitement, adaptée pour traiter électroniquement les signaux du moyen de capteur primaire (20) ; et
- une paroi (18a), interposée entre la première chambre (12) et la seconde chambre (18).

2. Dispositif selon la revendication 1, dans lequel la seconde chambre (18) est couplée à la première chambre (12) de manière libérable.

3. Dispositif selon la revendication 1 ou 2, dans lequel la portion d'attache (14) est conçue de façon à pouvoir être insérée dans le siège du manomètre d'un extincteur portable.

4. Dispositif selon la revendication 3, dans lequel la portion d'attache (14) est un élément fileté de type G 1/8 B ou G 1/4 B.

5. Dispositif selon l'une quelconque des revendications précédentes, dans lequel un second moyen de capteur primaire (20), adapté pour détecter la teneur en humidité dans le gaz contenu dans la première chambre (12) et pour générer des signaux correspondants corrélés à ladite teneur en humidité, est logé dans la seconde chambre (18).

6. Dispositif selon la revendication 5, dans lequel le second moyen de capteur primaire (20) est conçu pour détecter une différence diélectrique entre les faces de la paroi (18a) orientées vers les première et seconde chambres (12, 18).

7. Dispositif selon la revendication 5, dans lequel la première chambre (12) est en communication fluidique avec la seconde chambre (18), de sorte que le second moyen de capteur primaire (20) est en contact avec au moins une partie du flux gazeux contenu dans la première chambre (12).

8. Dispositif selon la revendication 7, comprenant un second filtre (16) au niveau de l'interface entre les première et seconde chambres (12, 18), ledit second filtre (16) ayant un maillage plus fin par rapport au premier filtre (16).

9. Dispositif selon l'une quelconque des revendications précédentes, dans lequel le premier et/ou le second filtre (16) sont adaptés pour intercepter des particules ayant un diamètre entre 30 et 300 µm.

10. Dispositif selon l'une quelconque des revendications précédentes, comprenant un moyen de capteur secondaire (22), adapté pour détecter la pression du gaz contenu dans la première chambre (12) et générer des signaux correspondants corrélés à ladite pression.

11. Dispositif selon l'une quelconque des revendications précédentes, comprenant des moyens de transmission (24) adaptés pour transmettre à l'extérieur du dispositif portable (9) des signaux provenant du moyen de capteur primaire (20) et/ou des données traitées par les moyens de traitement.

12. Dispositif selon la revendication 11, dans lequel les moyens de transmission (24) sont conçus pour établir une interface avec un dispositif de téléphone mobile.

13. Dispositif selon la revendication 11 ou 12, dans lequel les moyens de transmission (24) sont conçus sous la forme d'un câble USB s'étendant depuis le boîtier externe (10).
